# EUROPEAN PATENT APPLICATION

(11) **EP 3 970 486 A1**
(43) Date of publication of application: **23.03.2022**
(21) Application number: 21192290.1
(22) Date of filing: 20.08.2021
(51) Int. Cl.: A01M 29/18, B60Q 5/00, B06B 1/02

(54) **ROADKILL AND BIRD STRIKE PREVENTION SYSTEM**

(30) Priority: 22.09.2020 KR 20200122027
(71) Applicant: Jo, Jang Hee, Gyeonggi-do 11104 (KR)
(72) Inventor: Jo, Jang Hee, Gyeonggi-do 11104 (KR)
(74) Representative: M. Zardi & Co S.A.

(57) **Abstract**

The present invention provides a roadkill and bird strike prevention system comprising: an ultrasound generating circuit module (100) generating a control signal that generates frequency waves within predetermined ultrasound range; a connection wire (300) electrically connecting between the ultrasound generating circuit module (100) and a ultrasound output pad (200) and transmitting the control signal generated from the ultrasound generating circuit module (100) into the ultrasound output pad (200); and the ultrasound output pad (200) attached to a body of a vehicle, such as a motor vehicle, an aircraft, and a watercraft, and outputting ultrasound waves using the control signal transmitted from the ultrasound generating circuit module (100) through the connection wire (300).

## Description

### FIELD OF THE INVENTION

The present invention relates to a roadkill and bird strike prevention system and more particularly, a system for preventing animal collisions against vehicles such as motor vehicles, aircraft, and watercraft.

### BACKGROUND OF THE INVENTION

In modern society, technology developments have made people's lives more convenient. Especially, transportation technology is rapidly developing.

However, transportation vehicles threaten lives of many animals and insects by roadkill or bird strikes. More than 48 wild animals are being killed every day in Korea, and considering overseas cases, a huge number of animals are being sacrificed on the road. Likewise, the damage caused by bird strikes on aircraft is over 1.3 trillion won a year. According to data from Ministry of Land, Infrastructure and Transport, 136 bird strikes occurred in 2013, and 288 bird strikes in 2016 in Korea.

Animal collisions may lead to secondary accidents, which threaten lives of humans. In addition, drivers need to clean or manage their vehicles stained with dead insects caused by insect collisions.

To prevent these roadkill and bird strikes, various preventive means are suggested as the following.

There is no effective countermeasure for preventing insect collisions, but post-processing products such as coating agents have been developed and used. To prevent animal collisions, drivers are being educated on precautions regarding driving habits, such as slow driving, driving off the edge of the road, and a ban on hasty steering; however, there is no certain mechanical mean to prevent collisions.

As countermeasures against bird strikes, domestic and foreign airports use various methods to repel birds such as conventional ways using an explosive sound device or a loudspeaker, activities of Bird Alert Team (BAT), sound repellents using sounds that birds dislike, and laser repellents; however, the effects are limited. Furthermore, even though collision prevention efforts such as managements of bird habitats and bird activities using drones and DNA bar codes are being performed, bird strike accidents still occur.

Therefore, conventional methods for preventing roadkill and bird strikes are not effective. Accordingly, there is a need for a new measure that can increase the efficiency of roadkill and bird strike prevention.

The prior art document is Korean Publication Patent No. 10-10-2014-0106092

The purpose of this invention to solve the problems as mentioned above is to provide a mean using ultrasound, which is harmless to humans but repels animals, insects, and birds.

### SUMMARY OF THE INVENTION

According to the present invention, a roadkill and bird strike prevention system comprising: an ultrasound generating circuit module generating a control signal that generates frequency waves within predetermined ultrasound range; a connection wire electrically connecting between the ultrasound generating circuit module and a ultrasound output pad and transmitting the control signal generated from the ultrasound generating circuit module into the ultrasound output pad; and the ultrasound output pad attached to a body of a vehicle, such as a motor vehicle, an aircraft, and a watercraft, and outputting ultrasound waves using the control signal transmitted from the ultrasound generating circuit module through the connection wire.

The roadkill and bird strike prevention system may comprise an on/off switch turning on or off of the operation of the ultrasound generating circuit module.

The roadkill and bird strike prevention system may comprise an ultrasound range selection switch selecting an ultrasound range that is generated from the ultrasound generating circuit module.

An output surface of the ultrasound output pad outputs the ultrasound waves, and the output surface may be directly attached to the body of the vehicle.

The roadkill and bird strike prevention system may comprise an ultrasound amplifying medium interposed between the ultrasound output pad and the body of the vehicle, and the ultrasound generated from the ultrasound output pad is amplified through the ultrasound amplifying medium, and then transmits to the body of the vehicle.
he ultrasound amplification medium may be a capsule form containing water. In this instance, the front surface of the capsule is attached to the body of the vehicle, and the back surface of the capsule is attached to the ultrasound output pad 200.

The ultrasound amplification medium may be an iron plate. In this instance, the front surface of the iron plate is attached to the body of the vehicle, and the back surface of the iron plate is attached to the ultrasound output pad.

The roadkill and bird strike prevention system may be applied to any one of a motor vehicle, an aircraft, and a watercraft.

### TECHNICAL EFFECTS OF THE INVENTION

According to embodiments of the present invention, ultrasound waves generated from an ultrasound output pad are transmitted to the body of a vehicle, and thus, the body of the vehicle itself can be an ultrasound generating source.

In addition, according to embodiments of the present invention, because the body of the vehicle itself becomes an ultrasound generating source, ultrasound can be generated efficiently while the vehicle is driving, thereby preventing roadkill and bird strike accidents effectively.

### BRIEF DESCRIPTION OF THE DRAWINGS

FIG. 1 is a schematic drawing of a roadkill and bird strike prevention system used for vehicles such as a motor vehicle, an aircraft, and a watercraft according to embodiments of the present invention.
FIG. 2 is an illustrative drawing of an ultrasound output pad that is attached to a body of a vehicle according to embodiments of the present invention.
FIG. 3 is a drawing of an attachment location of an ultrasound output pad that is attached to a vehicle according to embodiments of the present invention.
FIG. 4 is a drawing of an attachment location of an ultrasound output pad that is attached to a two wheels vehicle according to embodiments of the present invention.
FIG. 5 is a drawing of an attachment location of an ultrasound output pad that is attached to an aircraft according to embodiments of the present invention.
FIG. 6 is a drawing of an ultrasound amplifying medium interposed between the ultrasound output pad and the body of the vehicle according to embodiments of the present invention.

### DETAILED DESCIPTION EMBODIEMENTS OF THE INVENTIONS

Hereafter, the advantageous effects and the features of the present invention and means to achieve those effects and features will be explained in conjunction with the accompanying drawings. However, embodiments disclosed below are not restricting or limiting the scopes of the inventive concepts and can be embodied in various forms. The embodiments of the present embodiments are provided to assist a person of ordinary skill in the art to gain a comprehensive understanding of the present disclosure. The embodiments shall be understood that they include all of the modifications, the equivalents, and the substitutions thereof within the scope of the present invention. In addition, detailed explanation regarding related elements or functions, which are well known to a person of ordinary skill in the art, will be omitted in case it may obscure the gist of the present invention.

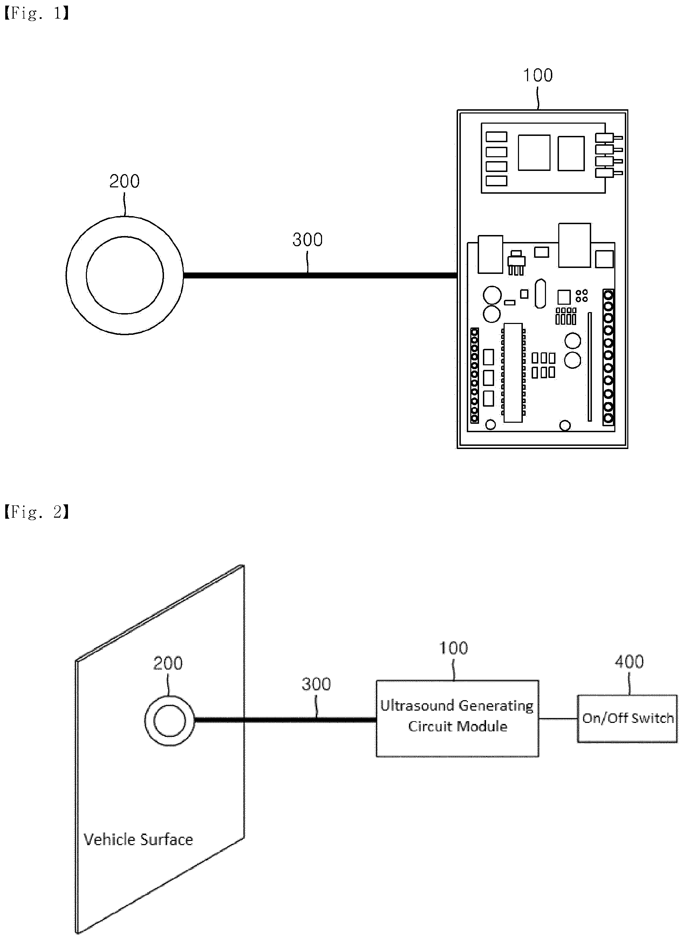

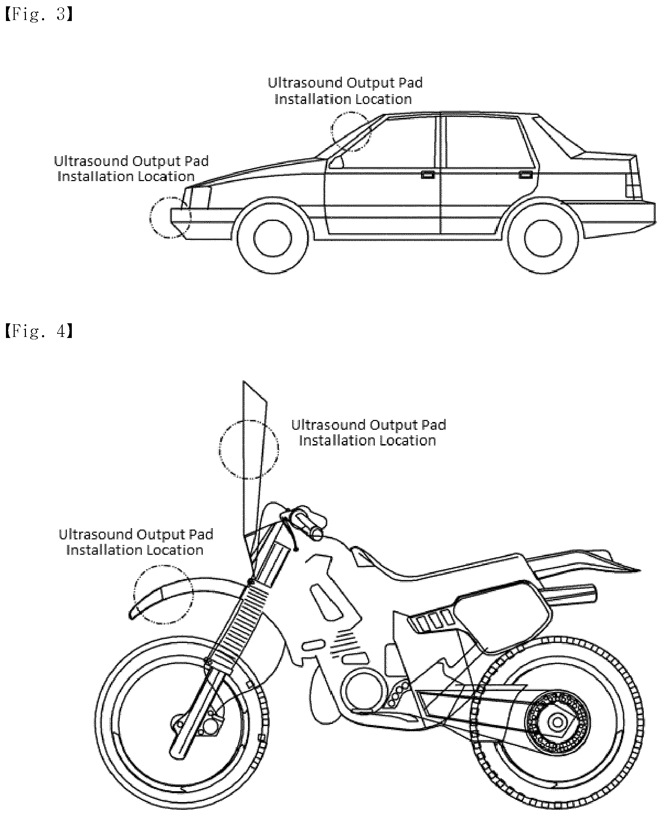

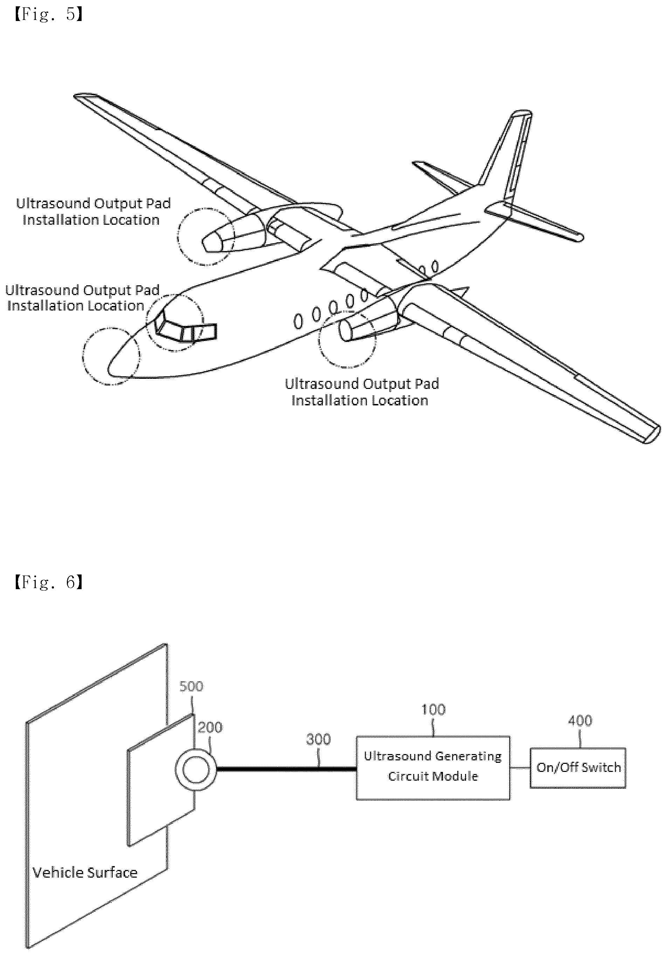

FIG. 1 is a schematic drawing of a roadkill and bird strike prevention system used for a motor vehicle, an aircraft, and a watercraft according to embodiments of the present invention. FIG. 2 is an illustrative drawing of an ultrasound output pad that is attached to a body of a vehicle according to embodiments of the present invention. FIG. 3 is a drawing of an attachment location of an ultrasound output pad that is attached to a vehicle according to embodiments of the present invention. FIG. 4 is a drawing of an attachment location of an ultrasound output pad that is attached to a two wheels vehicle according to embodiments of the present invention. FIG. 5 is a drawing of an attachment location of an ultrasound output pad that is attached to an aircraft according to embodiments of the present invention. FIG. 6 is a drawing of an ultrasound amplifying medium interposed between the ultrasound output pad and the body of the vehicle according to embodiments of the present invention.

In the detailed description below, the term "body" is used to mean a body, a frame, or a chassis of all forms of vehicles that can carry people or cargo, and may mean a body, a frame, or a chassis of a motor vehicle, an aircraft, or a watercraft.

In addition, the terms "roadkill" and "bird strike" are used to mean a bird strike, a collision between an aircraft and a bird in the air, a phenomenon that a watercraft collides with a whale in the sea, as well as a collision between a motor vehicle and animals or insects on the road.

The present invention uses a body of a vehicle such as a motor vehicle, an aircraft, and a watercraft as an ultrasound generating source.

As illustrated in fig. 1, a roadkill and bird strike prevention system used for a motor vehicle, an aircraft, and a watercraft of the present invention, comprises: an ultrasound generating circuit module 100 generating a control signal that generates frequency waves within a predetermined ultrasound range; a connection wire electrically connecting between the ultrasound generating circuit module 100 and a ultrasound output pad 200 and transmitting the control signal generated from the ultrasound generating circuit module 100 into the ultrasound output pad 200; and the ultrasound output pad 200 attached to a body of a vehicle, such as a motor vehicle, an aircraft, and a watercraft, and outputting ultrasound waves using the control signal transmitted from the ultrasound generating circuit module 100.

The ultrasound generating circuit module 100 generates the control signal that generates the frequency waves within the predetermined ultrasound range. When a power turns on, the ultrasound generating circuit module 100 generates the control signal that can generate ultrasound waves within the certain range of ultrasound that wild animals dislike.

The ultrasound generating circuit module 100 may include an oscillating part that generates ultrasound waves using an alternating current provided by an external power source and that amplifies it. The oscillating part may include an oscillatory circuit that converts the alternating current to a first ultrasound current required to generate ultrasound that wild animals dislike; and a variable amplifier circuit that amplifies the first ultrasound current converted by the oscillatory circuit to a second ultrasound current required to generate ultrasound that wild animal dislike.

In this instance, it is desired that the ultrasound generating circuit module 100 output a current that can generate ultrasound out of an audible frequency range from 16 to 20,000 Hz, and within a frequency range from 25,000 to 50,000 Hz that wild animals, such as mammal and bird, dislike.

In general, ultrasound has a good directivity, maintains a constant speed in the same medium, and has different speeds in different medium. Ultrasound can travel relatively far, maintain an almost constant speed regardless of temperature changes, and is harmless to humans.

The connection wire 300 electrically connects between the ultrasound generating circuit module 100 and the ultrasound output pad 200, and transmits the control signal generated from the ultrasound generating circuit module 100 to the ultrasound output pad 200. In this instance, the connection wire 300 may be a conductive wire that can send an electric current.

The ultrasound output pad 200 is attached to a body of a vehicle such as a motor vehicle, an aircraft, and a watercraft. The ultrasound output pad 200 outputs ultrasound waves using the control signal transmitted from the ultrasound generating circuit module 100. In this instance, the ultrasound output pad 200 can be made with piezoelectric ceramics material. The piezoelectric ceramics material can convert an electric current to a mechanical force or vibration.

As illustrated in fig. 2, the ultrasound generating circuit module 100 and the ultrasound output pad 200 are connected through the connection wire 300. The ultrasound output pad 200 is directly attached to the body of the vehicle, and the ultrasound waves generated from the ultrasound output pad 200 are transmitted to the body of the vehicle. As a result, the body of the vehicle itself becomes the ultrasound generating source, thereby generating effective ultrasound waves. With this vehicle, roadkill and bird strike accidents can be prevented effectively. Even if animals or insects lose their sights, the vehicles can avoid collisions against animals or insects and reduce roadkill and bird strike accidents because the vehicles send sounds that animals or insects recognize through their other sensory organs.

In case of a normal motor vehicle, as illustrated in fig. 3, the ultrasound output pad 200 may be attached to a windshield, a bumper, or other parts. In this instance, if a standby power of the roadkill and bird strike prevention system, such as black box, turns on, erosion of the painting surface, which is caused by bird excretion that dropped on the vehicle, can be prevented.

In case of a two wheels vehicle such as a motorcycle, as illustrated in fig. 4, the ultrasound output pad 200 may be attached to a fender, a headlight, a helmet of a driver, and other parts.

In case of an aircraft, as illustrated in fig. 5, the ultrasound output pad 200 may be attached to a cockpit window, a radar, the periphery of an air intake of a jet engine, and other parts.

As mentioned above, the roadkill and bird strike prevention system can be attached to the body or the parts of the vehicle, which require protection. In some embodiments, if the body of the vehicle includes a nonconductive material such as rubber in the middle thereof, the roadkill and bird strike prevention system may be added to each part of the body.

As illustrated in fig. 2, the roadkill and bird strike prevention system may further comprise an on/off switch that can turn on or off of the operation of the ultrasound generating circuit module 100. When the on/off switch installed inside the driver's seat is turned on, the ultrasound generating circuit module 100 starts operating and the body of the vehicle generates ultrasound waves that animals dislike. When the on/off switch is turned off, the ultrasound generating circuit module 100 stop operating.

In addition, the roadkill and bird strike prevention system may further comprise an ultrasound range selection switch that selects an ultrasound range, which is generated from the ultrasound generating circuit module 100.

Generally, because an ultrasound range that each animal, insect, or bird dislikes can be different, the ultrasound range may be selected depending on situations. For example, in case of a motor vehicle, a first ultrasound range that an animal such as a water deer dislikes, may be selected, and the system generates the ultrasound waves within the first ultrasound range. In case of an aircraft, a second ultrasound range that bird dislikes may be selected, and the system generates the ultrasound waves within the second ultrasound range.

The ultrasound output pad 200 may be attached to the body of the vehicle using two methods as the following.

First, as illustrated in fig. 2, an output surface that outputs the ultrasound vibration, may be directly attached to the body of the vehicle.

Second, as illustrated in fig. 6, an ultrasound amplifying medium 500 may be interposed between the ultrasound output pad 200 and the body of the vehicle. The ultrasound generated from the ultrasound output pad 200, can be amplified through the ultrasound amplifying medium 500, and then transmit to the body of the vehicle. Because the vibration transmissibility of the ultrasound may be different depending on transmission mediums, the ultrasound can be amplified through the ultrasound amplification mediums 500 interposed between the ultrasound output pad 200 and the body of the vehicle.

The ultrasound amplification medium 500 may be a capsule form containing water. The front surface of the capsule is attached to the body of the vehicle, and the back surface of the capsule is attached to the ultrasound output pad 200. In this instance, the vibration of the water inside the capsule can amplify the ultrasound. While the ultrasound in contact with air has approximately 340m/s of speed, the ultrasound in contact with water has approximately 1,530 m/s of speed.

In addition, the ultrasound amplification medium 500 may be an iron plate. The front surface of the iron plate is attached to the body of the vehicle, and the back surface of the iron plate is attached to the ultrasound output pad 200. The ultrasound in contact with iron material has approximately 5,000 m/s of speed.

While embodiments of the present invention have been described, the present invention is not limited to what has been particularly shown. It would be apparent that many more modifications and variations than mentioned above are possible by an ordinary person skilled in the art. The scope of the present invention includes scopes of appended claims, modifications, and variations.

## Claims

1. A roadkill and bird strike prevention system comprising:
an ultrasound generating circuit module generating a control signal that generates frequency waves within predetermined ultrasound range;
a connection wire electrically connecting between the ultrasound generating circuit module and an ultrasound output pad and transmitting the control signal generated from the ultrasound generating circuit module into the ultrasound output pad; and
the ultrasound output pad attached to a body of a vehicle, such as a motor vehicle, an aircraft, and a watercraft, and outputting ultrasound waves using the control signal transmitted from the ultrasound generating circuit module through the connection wire,
wherein an output surface of the ultrasound output pad outputs the ultrasound waves, and the output surface is directly attached to the body of the vehicle.

2. The roadkill and bird strike prevention system of claim 1, further comprising an on/off switch turning on or off of the operation of the ultrasound generating circuit module.

3. The roadkill and bird strike prevention system of claim 1, further comprising an ultrasound range selection switch selecting an ultrasound range that is generated from the ultrasound generating circuit module.

4. The roadkill and bird strike prevention system of claim 1, further comprising an ultrasound amplifying medium interposed between the ultrasound output pad and the body of the vehicle,
wherein the ultrasound generated from the ultrasound output pad is amplified through the ultrasound amplifying medium, and then transmits to the body of the vehicle.
